# EUROPEAN PATENT APPLICATION

(11) **EP 1 278 390 A1**
(43) Date of publication of application: **22.01.2003**
(21) Application number: 02702858.8
(22) Date of filing: 11.03.2002
(51) Int. Cl.: H04Q 7/38, H04L 12/66, G06F 15/00, G06F 12/00

(54) **INFORMATION DELIVERY METHOD AND INFORMATION DELIVERY MANAGEMENT APPARATUS**

(30) Priority: 09.03.2001 JP 2001066058
(71) Applicant: MATSUSHITA ELECTRIC INDUSTRIAL CO., LTD., Kadoma-shi, Osaka 571-8501 (JP)
(72) Inventor: MIYA, Kazuyuki, Asao-ku, Kawasaki-shi, Kanagawa 215-0021 (JP)
(74) Representative: Grünecker, Kinkeldey, Stockmair & Schwanhäusser Anwaltssozietät
(86) International application number: JP0202226
(87) International publication number: WO02074001

(57) **Abstract**

An information delivery method whereby wireless channel traffic is dispersed when data is downloaded from a contents server to mobile communications terminals by way of a mobile network and a cable network. Information delivery management section (103) provided in the mobile network temporarily stores a downloading request for the server or data that is output from the contents server while monitoring traffic in wireless channels or in the cable network. The user of a mobile communication terminal sets a maximum time period that allows downloading to be carried out. When traffic is light in wireless channels within the allowable time, the data is delivered to the mobile communications terminal.

## Description

### Technical Field

The present invention relates to information delivery methods and information delivery management apparatus.

### Background Art

The development of digital wireless communications technologies in recent years has made large volume data transmission possible. For example, it is possible to download music data to a mobile phone terminal through wireless communications.

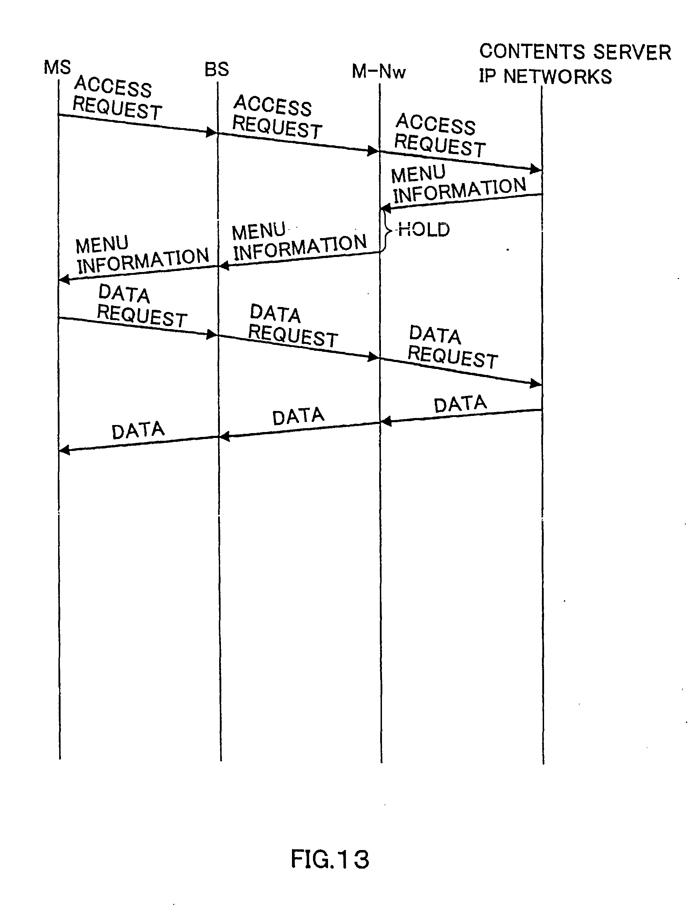

FIG. 13 shows an example (a conventional example) of operational steps for downloading information that a contents server distributes to communications terminals such as mobile phone terminals.

In FIG. 13, "MS" refers to a communications terminal, "BS" a base station, and "M-NW" a mobile network.

In addition, a contents server is a server that stores music information and video information and such, and an IP network refers to a network (such as the Internet) that performs data transmission in compliance with the IP protocol.

When a communications terminal (MS) receives downloading services such as music distribution, the communications terminal first issues an access request to the base station (BS). The access request is transmitted from BS to a contents server on an internet network (IP network) by way of a mobile network (M-NW).

In response to the access request, menu information is transmitted to the mobile network (M-NW) from the contents server, and then transmitted to the communications terminal (MS) by way of the base station (BS). In case such as when the frequency of access is high, depending on needs, the menu information is held in the mobile network (M-NW).

When the user of a communications terminal (MS) chooses data that he wants to download from the menu information, a data delivery request is transmitted from the communications terminal to the contents server by way of the base station (BS) and mobile network (M-NW). Then, in response to the data delivery request, music information or such is output from the contents server, and the information is downloaded to the communications terminal (MS) by way of the base station and mobile network.

Downloading services such as this music distribution transmits a large volume of data at a time. So if a large number of users use downloading services at the same time, communications traffic will increase, which then makes efficient data transmission difficult. At worst, some users may not be able to establish connection to the contents server.

In a cable network, generally, sufficient channel capacity is secured. However, communication capacity in wireless communications between communications terminals (MS) and base stations (BS) is not always sufficient.

In consideration of traffic peak, it is possible to reinforce facilities to secure sufficient system capacity in the wireless communications system. However, such infra investments would be enormous and an increase in communications fees may result. This solution therefore is not a practical one.

### Summary of the Invention

An object of the present invention is to avoid traffic congestion and realize efficient information delivery services without infra investments into wireless communications.

The present invention is configured such that when real-time downloading (information delivery from a contents server on a real-time basis) is not required, the timing for delivering information is dispersed within an allowable time period so as to avoid concentration of traffic.

For example, the user sets a maximum allowable time for downloading (allowable time), such as from 1 a.m. to 3 a.m., when the user is asleep or three hours from the current point in time.

Downloading is performed at times of light traffic within this allowable time.

According to the information delivery method of the present invention, a downloading request for a contents server or data that is delivered from a contents server is temporarily stored in a mobile network. Then the level of congestion in wireless channels is monitored, and within the allowable time, when the level of congestion is at a level that does not have negative impact on downloading, a downloading request is transmitted to the contents server, and in turn, data information delivered from the contents server will be transmitted to the mobile communications terminal.

By this means, it is possible to make effective use of time periods of low congestion (light traffic) in wireless channels and disperse congestion (traffic) in wireless channels to prevent concentration. Therefore, without infra investments for securing system capacity that can accommodate traffic peak, it is possible to avoid traffic congestion and realize high system throughput and hence efficient data transmission.

According to one aspect of the information delivery method of the present invention, the level of congestion in wireless channels as well as in a cable network is monitored.

According to another aspect of the present invention, timing to start downloading is determined with reference to information of earlier traffic in wireless channels and in a cable network.

According to yet another aspect of the present invention, if connection with a mobile communications terminal cannot be established within an allowable time period, data that is temporarily stored will be discarded.

According to yet another aspect of the present invention, in case the allowable time is about to end and yet traffic congestion in wireless channels does not lighten, delivery data that is temporarily stored will be forcibly transmitted to the mobile communications terminal.

### Brief Description of Drawings

FIG. 1 is a block diagram showing a configuration of a system that delivers information to a mobile communication terminal;
FIG. 2 is a block diagram showing a sample configuration of an information delivery management apparatus of the present invention;
FIG. 3 shows a sequence diagram describing an example of the information delivery method of the present invention;
FIG. 4 is a flow diagram showing an example of major steps in the information delivery method of the present invention;
FIG. 5 is a sequence diagram describing another example of the information delivery method of the present invention;
FIG. 6 is a flow diagram showing another example of major steps in the information delivery method of the present invention;
FIG. 7 is a sequence diagram for describing yet another example of the information delivery method of the present invention;
FIG. 8 is a sequence diagram for describing yet another example of the information delivery method of the present invention;
FIG. 9 is a diagram showing an example of changes in traffic over a day in an area that a base station covers;
FIG. 10 is a diagram showing a configuration of a communication network for delivering music information and such from a contents server to a mobile communication terminal;
FIG. 11A is a diagram illustrating Embodiment 1 of the present invention;
FIG. 11B is a diagram illustrating Embodiment 2 of the present invention;
FIG. 12 is a diagram illustrating Embodiment 3 of the present invention; and,
FIG. 13 is a sequence diagram describing a conventional information delivery method.

### Best Mode for Carrying Out the Invention

In case of music distribution or when downloading a game soft, data is not always immediately requested. For example, it may suffice if downloading is completed late at night such as while the user is asleep or in two or three hours from the current time.

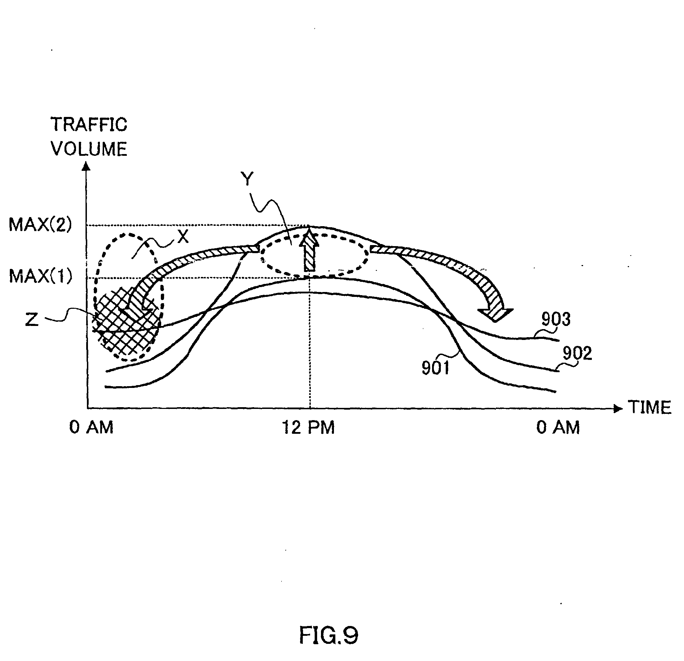

As shown in FIG. 9, with each area covered by a base station, time periods for heavy traffic and light traffic are fixed to an extent.

In FIG. 9, characteristic curve 901 shows changes in current traffic volume. As shown in the figure, traffic reaches a peak around 12:00 p.m. Assume this peak value is MAX (1), and a case will be contemplated here where a mobile communications structure is built with system capacity that can accommodate this MAX (1).

As shown in the figure, traffic is extremely low around 0:00 a.m., and so system capacity has sufficient vacancy late at night. In the figure, the part assigned the code "Z" denotes useless system capacity.

Next, a case will be contemplated here where traffic volume changes as characteristic curve 902. The peak value in traffic shows an increase to MAX (2).

In order to deal with this, system capacity needs enhancement to be capable of accommodating MAX (2). In the figure, the part assigned the code "Y" denotes enhanced system capacity.

However, traffic decreases late at night, and so enhanced system capacity is of no use and there will be more useless infra facilities. In the figure, the "X" part denotes useless system capacity.

If then the portion ("Y" portion) of peak traffic volume on characteristic curve 902 can be dispersed to the "Z" portion that has space in system capacity, changes in traffic volume become smooth as from characteristic curve 902 to characteristic curve 903, and consequently, the peak level of traffic will decrease.

Therefore, useless enhancement of facilities such as described above becomes unnecessary. In some cases, there is a possibility that peak value can be made lower than characteristic curve 901 of current traffic.

This is the logic that the present inventor has focused on. With the present invention, the user is enabled to choose a time of preference (allowable time) as to until when downloading should be completed, whereby traffic can be dispersed largely in time.

By this means, it is possible to avoid traffic congestion and realize efficient data transmission without infra investments.

That is to say, the feature of the present invention is that, when wireless channels or network channels are congested, data subject to downloading is temporarily held in a mobile network (M-NW) while the level of congestion (traffic) is monitored in wireless channels and on the network side, and large-volume data transmission such as downloading is performed when the level of congestion is low.

With reference to the accompanying drawings now, embodiments of the present invention will be described below.

### (Embodiment 1)

According to the present embodiment, a data request (command) from the user is held in an information delivery management apparatus provided in a mobile network while the volume of traffic in wireless channels (the level of congestion) is monitored, and when traffic volume goes below a certain level within the allowable time period, access will be made to a contents server, and data is downloaded and transmitted to the user.

That is, according to the information delivery method of the present embodiment, the level of congestion in wireless channels is monitored while a data request from the communications terminal is stored in the information delivery management apparatus, and at times of low congestion in wireless channels, access is made to the data provider to transmit the data request thereto, while data obtained from the data provider is transmitted to the communications terminal.

In the present description, the level of congestion in wireless channels refers to condition of wireless channels such as traffic and total transmission power, and accordingly, when the phrase "level of congestion in wireless channels" is mentioned, this refers to condition of wireless channels such as traffic and total transmission power.

In the following, cases will be described where the level of congestion refers to traffic volume.

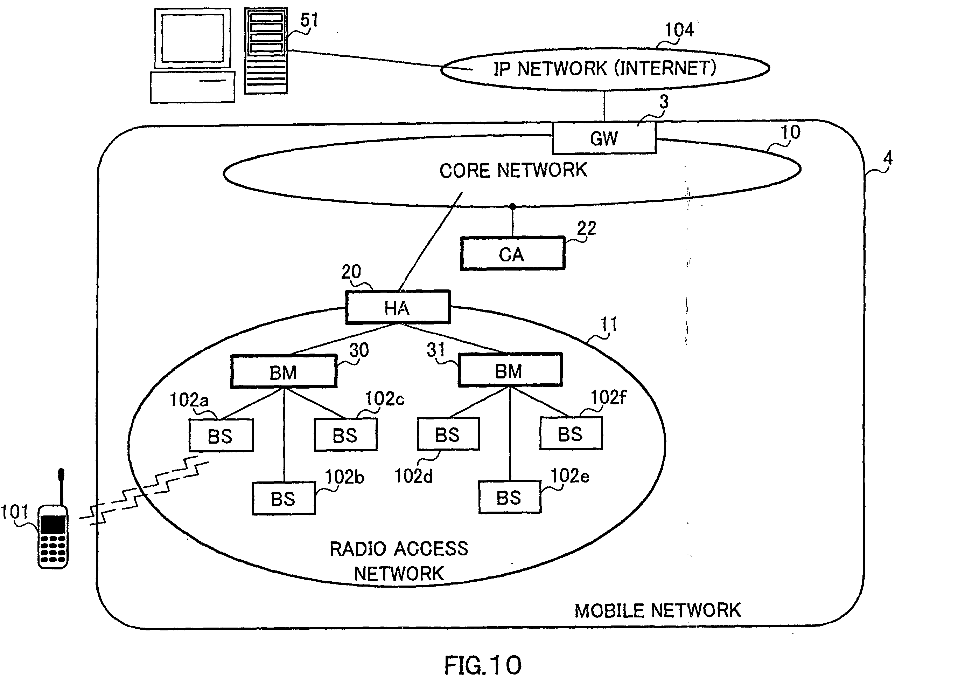

First, the overall configuration of a communication network will be described with reference to FIG. 10.

In FIG. 10, mobile communications terminal 101 communicates with contents server 105 via mobile network 4 and IP network (Internet) 104 and downloads desired data from contents server 105.

Mobile network 4 includes radio access network 11 and core network 10. In addition, mobile network 4 comprises control functions generally required in a mobile communication network (not illustrated, such as call connection, position registration, and channel quality control).

Mobile network 4 in this context refers to a communication network in a broad sense for mobile communication and is distinguished from an all-purpose cable network such as the Internet.

Radio access network 11 is a communication network indispensable for the implementation of mobile wireless communication, and comprise base station (BS) 102a to 102f, base station management apparatus (BM) 30 and 31, and a home agent (HA: non-essential component) that manages information that relates to mobile communication terminal 101 in radio access network 11.

The above-mentioned base station management apparatus (BM) can be referred to as a radio network controller (RNC) in the field of cellular system communication.

Core network 10 is a cable network shared by a number of wireless networks.

Gateway (GW) 3 is provided in core network 10. By way of this gateway (GW) 3, core network 10 and IP network 104 are connected.

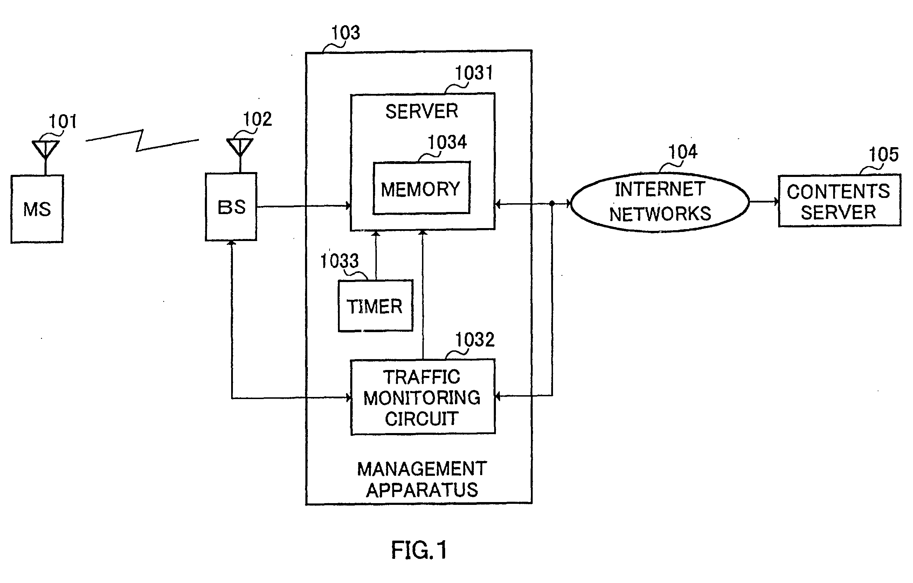

The information delivery management apparatus used in the present invention (reference code 103 in FIG. 1) is an apparatus provided in a mobile network, such as in base station management apparatus 30 and 31, in home agent (HA) 20, and in server (CA) 22 connected to core network 10.

The information delivery method and information delivery management apparatus of the present invention will be explained below in detail.

FIG. 1 is a block diagram showing a configuration of the information delivery management apparatus and information delivery system according to the embodiments of the present invention.

The information delivery system shown in FIG. 1 consists essentially of mobile communications terminal (MS) 101 and base station (BS) 102, information delivery management apparatus 103 via internet network 104, internet network 104, and contents server 105 that is the data provider.

Information delivery management apparatus 103 comprises traffic monitoring circuit 1032 that monitors traffic in respect to base station (BS) 102 and internet network 104, server (transmission control section) 1031 that manages temporary storage of delivery data from contents server 105 and transmission start, and timer 1033 for time management.

Server (transmission control section) 1031 has memory 1034.

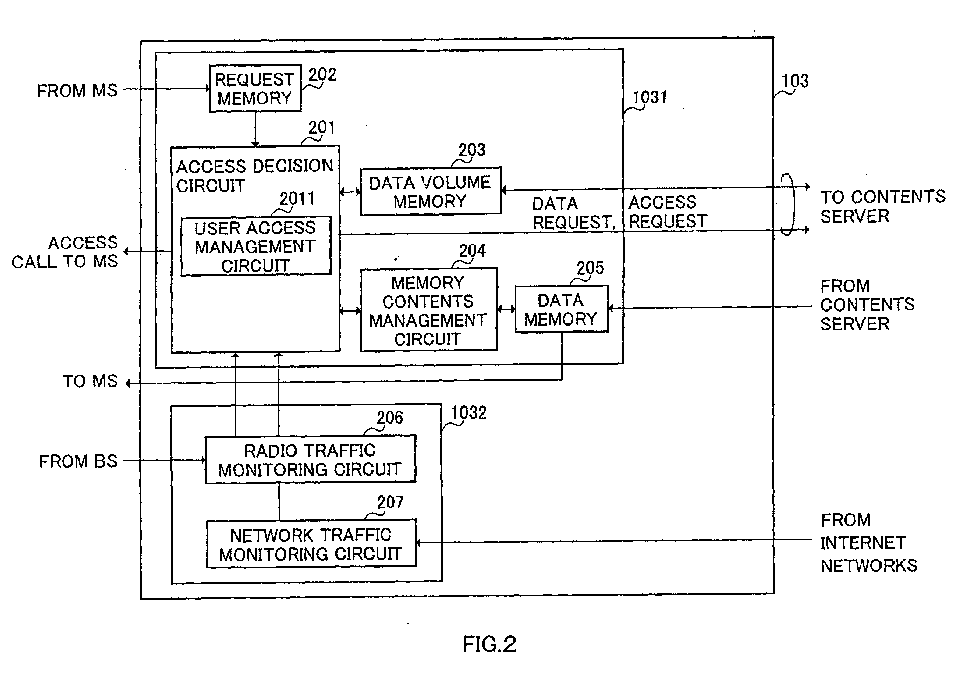

FIG. 2 is a block diagram showing an internal configuration of the information delivery management apparatus according to the present embodiment of the present invention.

Information delivery management apparatus 103 consists essentially of server 1031 and traffic monitoring circuit 1032.

Server (transmission control section) 1031 comprises access decision circuit 201 that makes decisions as to wireless channel access to the mobile communications terminal (MS) and access to a mobile network (M-NW), request memory 202 that stores an access request (requested file name; access end, and allowed delay time) from the mobile communication terminal (MS), data volume memory 203 that stores the volume of data to download from contents server 105, data memory 205 that stores the data downloaded from contents server 105, and memory contents management circuit 204 that manages contents of the data stored in data memory 205 according to the situation of access.

Access decision circuit 201 has access management circuit 2011 that decides as to whether data downloaded from contents server 105 is popular data (or whether the number of access times is large) and manages fee charges to the user.

Traffic monitoring circuit 1032 comprises radio traffic monitoring circuit 206 that monitors traffic in wireless channels between mobile communications terminal (MS) 101 and base station (BS) 102, and network traffic monitoring circuit 207 that monitors traffic between mobile communications terminal (MS) and a mobile network (M-NW).

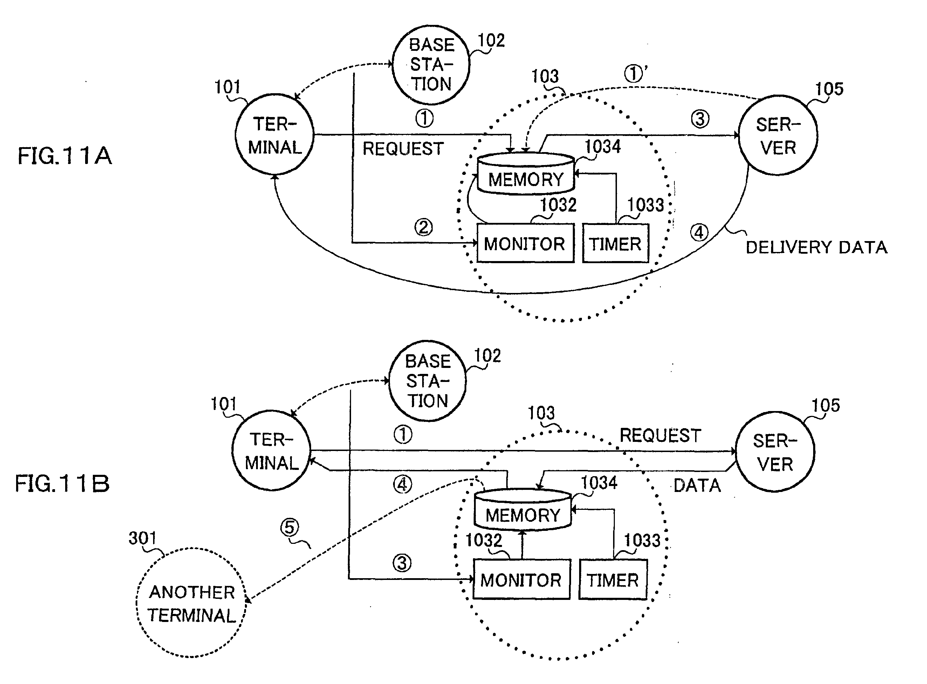

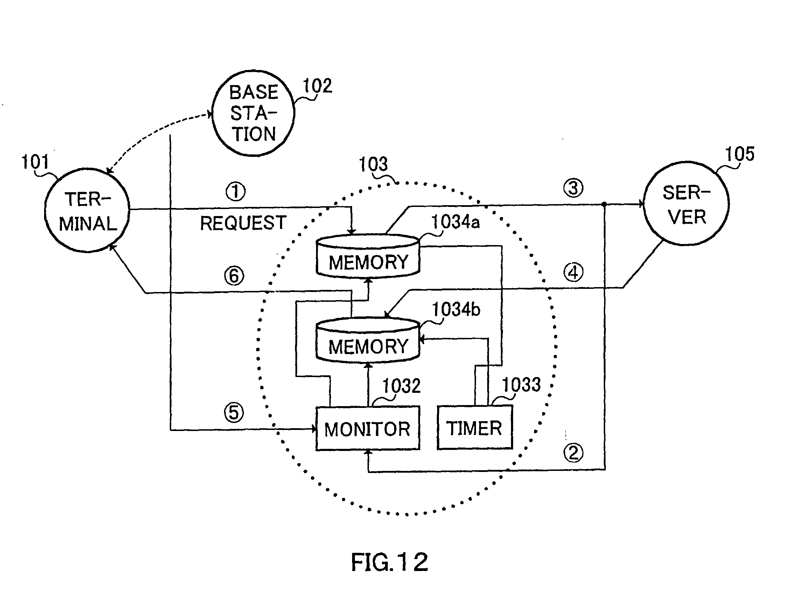

With respect to embodiments of the information delivery method according to the present invention, there are three types of embodiments as shown in FIG. 11A, FIG. 11B, and FIG. 12.

In FIG. 11A, FIG. 11 B, and in FIG. 12, the order of operations is indicated with circled numbers for clear understanding.

In the embodiment shown in FIG. 11A, a downloading request issued from mobile communications terminal 101 is temporarily stored in memory 1034 in information delivery management apparatus 103 (step ①). Meanwhile, attributive information from server 105 such as the type and data volume of information subject to downloading is stored in memory 1034 in information delivery management apparatus 103 (step ①').

Then by means of traffic monitoring circuit 1032, the condition in wireless channels between mobile communications terminal 101 and base station 102 is monitored (step ②).

Information delivery management apparatus 103 manages time information (hour information) using timer 1033, and when traffic in wireless channels is light in the time period that allows downloading, the downloading request is read out from memory 1034 and transmitted to server 105 (step ③).

Then, the data output from server 105 is delivered to mobile communications terminal 101 (step ④).

Furthermore, with the embodiment shown in FIG. 11B, a downloading request from mobile communications terminal 101 is directly transmitted to server 105 (step ①).

Subsequently, the data output from server 105 is temporarily stored in memory 1034 in information delivery management section 103 (step ②).

Then, the condition of wireless channels between mobile communications terminal 101 and base station 102 is monitored by traffic monitoring circuit 1032 (step ③).

Information delivery management apparatus 103 manages the time information (hour information) using timer 1033, and when traffic in wireless channels is light in the time period that allows downloading, the data is read out from memory 1034 and then transmitted to mobile communication terminal 101 (step ④).

If the data stored in memory 1034 is of high value and frequently requested from other mobile communications terminals, instead of server 105, information delivery management apparatus 103 delivers the data to mobile communications terminal 301 (step ⑤).

The embodiment shown in FIG. 12 is a combination of the embodiments of FIG. 11 and FIG. 11 B.

So, a downloading request issued from mobile communications terminal 101 is temporarily stored in memory 1034a in information delivery management apparatus 103 (step ①).

Traffic monitoring circuit 1032 monitors the level of congestion in an IP network and the level of access concentration in server 105 and such (step ②).

When the level of congestion in the IP network or the level of access concentration in server 105 is low, information delivery management apparatus 103 reads out the downloading request from memory 1034a and transmits the request to server 105 (step ③).

The data output from server 105 is temporarily stored in memory 1034b in information delivery management apparatus 103 (step ④).

Then, traffic in wireless channels is monitored (step ⑤), and when the traffic in wireless channels is low within the allowable time for downloading, the data is read out of memory 1034b and transmitted to mobile communications terminal 101 (step ⑥).

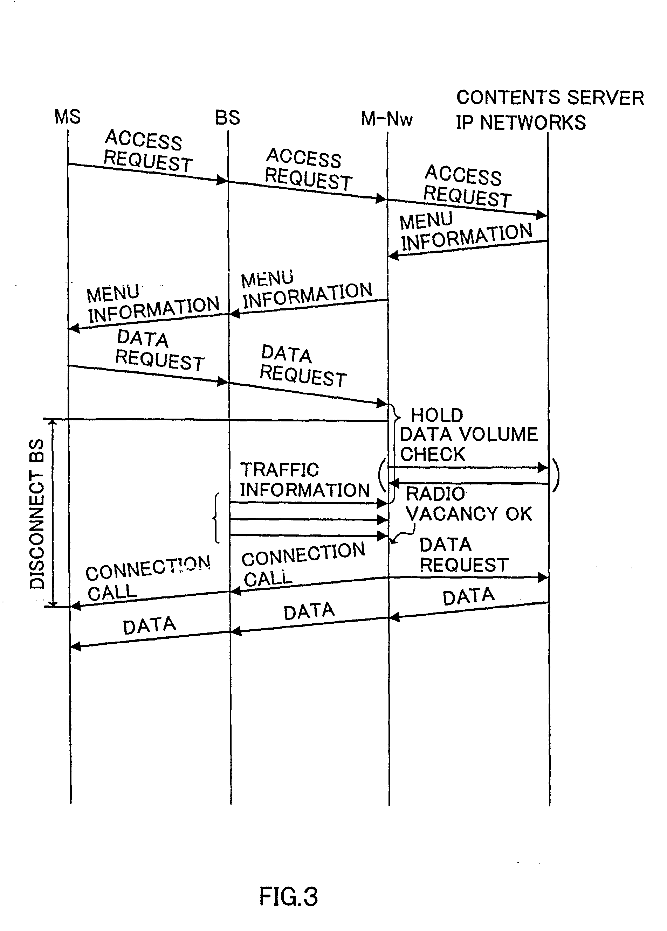

FIG. 3 shows a sequence diagram describing an example of an information delivery method.

The operations of information delivery will be described below with reference to FIG. 1 to FIG. 3. In the transmission method shown in FIG. 1 and FIG. 2, when mobile communications terminal (MS) 101 receives downloading services such as music distribution, first, mobile communications terminal (MS) 101 issues an access request (requested file name, access end, allowable delay time) to base station (BS) 102.

This access request is transmitted from base station (BS) 102 to contents server 105 in the internet network (IP network) by way of information delivery management apparatus 103.

The user chooses an allowable delay time (the period from a data request until data transmission, or the time until the service starts) from predetermined maximum delay times for the service (for instance, 3 hours, 12 hours, and 24 hours) or choose a more broadly defined transmission time (or transmission time period) such as night time transmission.

For example, assume it is presently 8:00 p.m. Moreover, assume that the time period for data delivery in this case is set from 1:00 a.m. to 2:00 a.m., with the maximum allowable delay time of six hours, from 8:00 p.m. to 2:00 a.m.

In the present description, a maximum delay time may be interchangeably phrased as an "allowable time." By this means of traffic dispersion, it is possible to prevent infra investments. In addition, by completing data transmission within the maximum delay time of the user's choice, satisfaction is guaranteed for the contents of services including the charges.

From contents server 105, menu information is transmitted in response to an access request to information delivery management apparatus 103 and then transmitted to mobile communications terminal (MS) 101 by way of base station (BS) 102. In case such as when the frequency of access is high, depending on needs, the menu information is held in data memory 205 of information delivery management apparatus 103.

When the user chooses data that he wants to download from the menu displayed on mobile communications terminal (MS) 101, a data request is transmitted from mobile communications terminal (MS) 101 to information delivery management apparatus 103 by way of base station (BS) 102, and stored in request memory 202.

At this point, access decision circuit 201 is informed to the effect that there has been a data request.

From this point onward, mobile communications terminal (MS) 101 may disconnect channels with base station (BS) 102. This channel disconnection is performed in accordance with instructions from access decision circuit 201.

When the transmission rate in wireless channels is good during the period after the user requests data until this data is transmitted, wireless channels are connected briefly to perform downloading.

Downloading is thus completed in a short time, which reduces power consumption in the mobile communications terminal. Consequently, it is possible to make the battery for mobile communications terminals last long.

On the other hand, channel connection at times of poor transmission rates in wireless channels results not only in an increase in traffic peak but also in prolonged interference against other users, which as a whole results into a decrease in system throughput.

Consequently, by disconnecting wireless channels as described above, it is possible to prevent such decrease in system throughput.

Next, before starting to receive information delivery from contents server 105, access decision circuit 201 transmits a data volume check request for information that is subject to delivery. Then, the data volume information sent from consents server 105 is stored in data volume memory 203.

As thus described, by checking the volume of data that is subject to downloading in advance, it is possible to secure memory space to store data with certainty on both the mobile communications terminal (MS) 101 side and the information delivery management apparatus 103 side.

In addition, if the data volume of information subject to downloading is already known, it is possible to estimate the time it takes for downloading on the basis of the level of congestion in wireless channels and the radio access network.

By this means, it is possible to smoothly perform large volume data transmission such as data downloading.

Incidentally, there are cases where the data volume can be obtained with menu information. In such case, there is no need to obtain data volume information again from the contents server later.

Radio traffic monitoring circuit 206 in traffic monitoring circuit 1032 monitors traffic in wireless channels between mobile communications terminal (MS) 101 and base station (BS) 102.

To be more specific, base station (BS) 102 transmits traffic information concerning wireless channels to traffic monitoring circuit 206.

Radio traffic monitoring circuit 206 monitors the condition of light traffic in wireless channels.

In the following description, "wireless channel vacancy" refers to a state where wireless channels is relatively unoccupied, including cases where there is no one using wireless channels.

As for the decision in radio traffic monitoring circuit 206, a possible arrangement is to set a threshold level for traffic, and when traffic grows above this threshold level, a decision may be made that traffic is crowded.

In addition, based on the record of earlier congestion levels (such as shown in FIG. 9) and prior information such as the time a concert will be held or certain contents will be on sale, the level of congestion may be estimated.

Such record of earlier congestion levels and prior information are stored, for instance, in user access management circuit 2011.

By this means, dispersing traffic at its peak and making traffic smooth with time can be realized more effectively. As a result of this, expansion of maximum system capacity can be avoided.

Furthermore, the transmission of traffic information from base station (BS) 102 can be performed either regularly or when such request is made from radio traffic monitoring circuit 206 to base station (BS) 102.

When radio traffic monitoring circuit 206 obtains information that is "wireless channel vacancy" from base station (BS) 102, radio traffic monitoring circuit 206 outputs a control signal to access decision circuit 201 to the effect that wireless channels have space.

Upon receiving this control signal, access decision circuit 201 transmits the data request stored in request memory 202 to contents server 105. Moreover, access decision circuit 201 makes a connection call to mobile communications terminal (MS) 101 by way of base station (BS) 102.

Also, when a downloading request is transmitted to contents server 105, it is possible to deem either that the user directly performed the transmission or that an agency operator performed the transmission.

When connection is established between mobile communications terminal (MS) 101 and base station (BS) 102, data that mobile communications terminal (MS) 101 requested travels from contents server 105 through information delivery management apparatus 103 and base station (BS) 102, and the information is downloaded to mobile communications terminal (MS) 101.

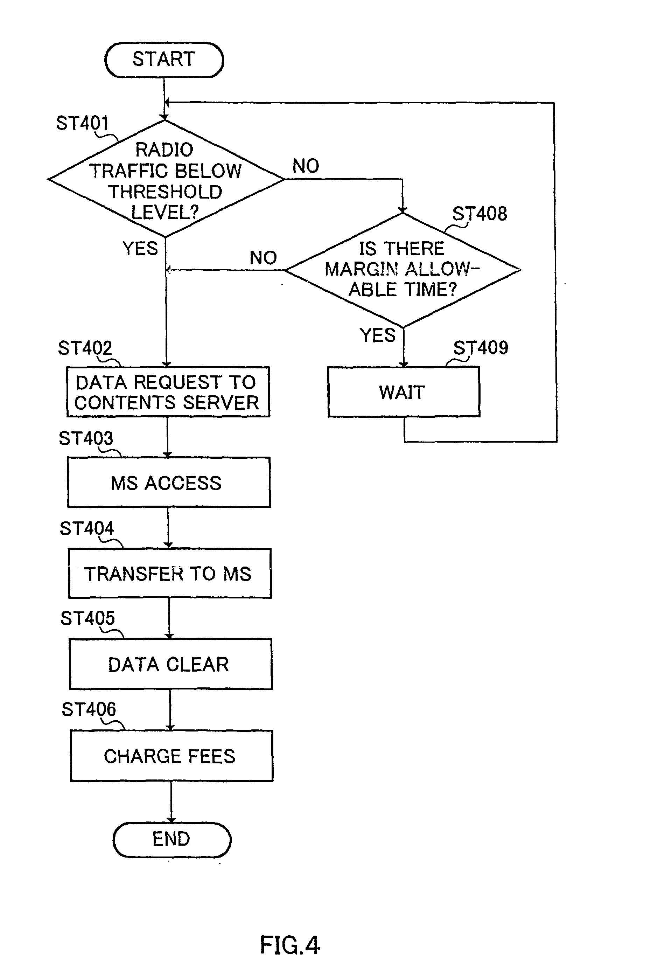

Now, an example of operations according to the present embodiment from radio traffic monitoring through data downloading will be described with reference to FIG. 4.

In step (hereinafter "ST") 401, radio traffic monitoring circuit 206 makes decisions as to whether radio traffic is below the threshold level.

If radio traffic is below the threshold level, upon consideration that wireless channels have space, access decision circuit 201 makes a request for data to contents server 105 (ST 402).

Access decision circuit 201 accesses mobile communications terminal (MS) 101 (ST 403).

Thereafter, data is transferred (downloaded) from contents server 105 to mobile communications terminal (MS) 101 (ST 404).

Then, the downloaded data is deleted (cleared) from data memory 205 (ST 405), and the user will be charged fees (ST 406).

When such downloading service is provided, when a data transmission request is made, fees will be charged at lower rates than conventional services that would immediately start transmitting data.

For example, communication fees may be on a per bit basis or may be based on connection time, or downloading fees may be entirely discounted.

On the other hand, if radio traffic is not below the threshold level, decisions are made as to whether there is a margin before the allowable delay time is over (time denoting until when downloading should be completed) (ST 407).

If there is a margin in the allowable delay time, there will be waiting (ST 408); if there is no margin in the allowable delay time, a request for data is made to the contents server (ST 402).

In the case of no margin in the allowable delay time, when there is little left before the allowable delay time is over (for instance, when the threshold level check shows a level below the threshold level), and yet the level of congestion does not become low (or there is no chance), a scheduling is forcibly made irrespective of the level of congestion, and connection is established to the network side and/or the communication terminal to transmit the requested data to mobile communication terminal (MS) 101.

This processing is performed by access decision circuit 201 based on traffic information from traffic monitoring circuit 1032 (wireless channel traffic, network traffic, etc.).

By this means, transmission is carried out within the permissible delay time with certainty. Moreover, it is possible to prevent erroneous decisions regarding the level of congestion in data transmission (occurrence of incomplete transmission within the allowable delay time).

Here, a case will be assumed where traffic in wireless channels is light and the mobile communications terminal (MS) 101 side is busy, or where connection cannot be established because the power is off with mobile communications terminal (MS).

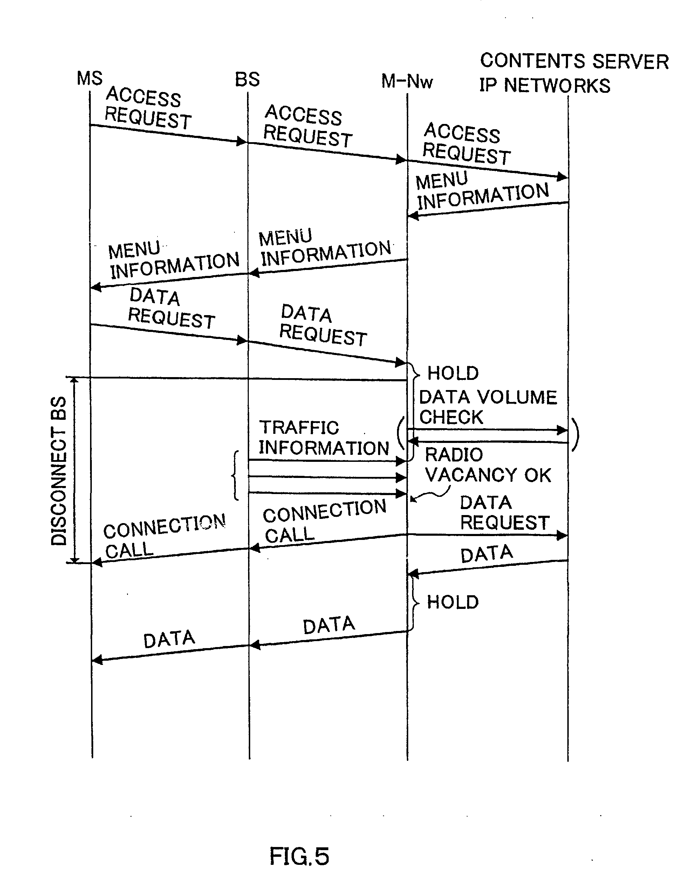

In such cases, as shown in FIG. 5, data that is subject to delivery is temporarily stored in information delivery management apparatus 103, and the data is transmitted when base station (MS) 101 is capable of downloading.

In addition, in case a given number of attempts have been made to access wireless communications channels and yet access has been unsuccessful, or when data transmission ended incomplete, the data will be discarded.

In addition, when information subject to delivery relates to a concert of a popular singer and frequent downloading requests from a large number of mobile communications terminals (MS) are envisaged, the number of accesses becomes enormous if all the downloading requests from separate terminals are sent to the contents server, and this significantly increases the volume of communication.

When such situation occurs, dispersing peak traffic on the wireless channels side does not solve the problem of transmission volume on the network side, and information delivery within the allowable delay time becomes difficult on the user (mobile communications terminal) level. In such case, the network side also needs enhancement of facilities.

In addition, if processing speed is insufficient with the contents server, improving processing speed or capacity on the network side does not solve the above problem.

In such case, instead of contents server 105, information delivery management apparatus 103 delivers information to a number of mobile communications terminals.

In other words, even after information delivery management apparatus 103 delivers information to a mobile communication terminal, the information stored in data memory 205 will not be discarded but held. This enables information delivery management apparatus 103 to respond to a downloading request from another user.

Such management takes place in user access management circuit 2011 of access decision circuit 201.

As thus described, by holding information that is subject to delivery in information delivery management apparatus 103, provided that base station (MS) 101 is capable of communication, it is possible to deliver information to mobile communications terminals at any time.

In addition, there is no need for transmission to the service side (contents server 105) every time there is a downloading request, and consequently, the number of accesses to the network side will decrease and hence a reduction in communication volume. Moreover, regardless whether or not channels on the network side are congested, information downloading can be performed smoothly.

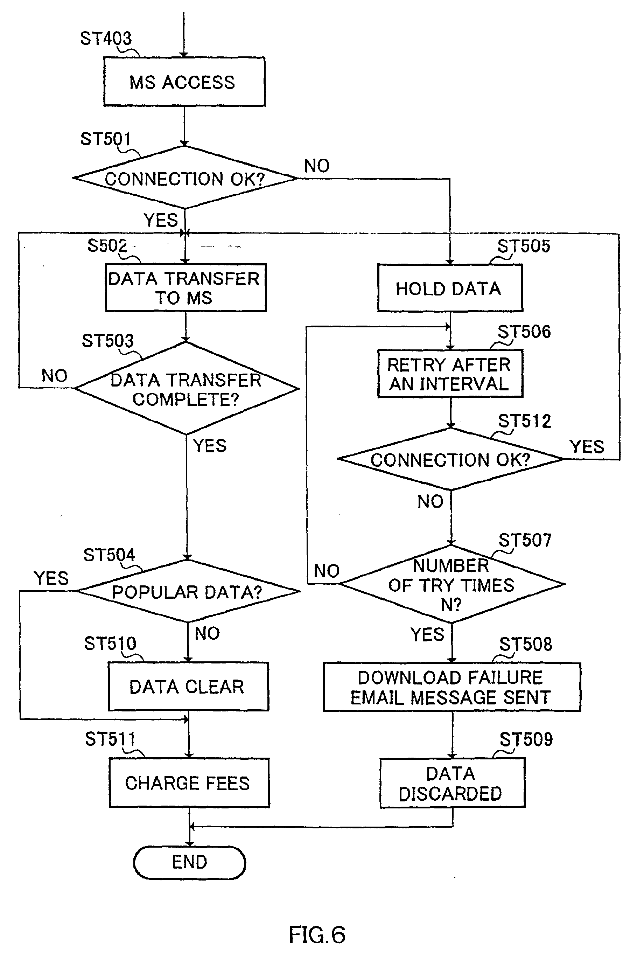

Now, an example of the operations according to the present embodiment from radio traffic monitoring through data downloading will be described with reference to FIG. 6.

In radio traffic monitoring circuit 206, decisions are made as to whether radio traffic is below the threshold level, and if it is, access will be made to mobile communications terminal (MS) 101 (ST 403). This operation is identical with the operation shown in FIG. 4.

Next, access decision circuit 201 makes a decision as to whether channel connection is possible with mobile communications terminal (MS) 101 (ST 501).

If connection is possible, data is transferred (downloaded) from contents server 105 to mobile wireless terminal (MS) 101 (ST 502).

Then, a decision is made as to whether data transmission is complete (ST 503). If the data transfer is complete, a decision is then made as to whether the downloaded data is one that relates to popular contents (ST 504).

If the downloaded data is one that relates to popular contents, a large number of data requests from other mobile communications terminals (MS) are envisaged, so this data stored in the memory will be maintained without being deleted, and the user will be charged fees to conclude the process (ST 511).

On the other hand, if the data transfer is not complete, the data transfer will continue (ST 502).

In addition, if the downloaded data is not one relating to popular contents, the downloaded data will be deleted from data memory 205 (ST 501), and the user will be charged fees to conclude the process (ST 511).

When mobile communications terminal (MS) 101 is busy or the power is off, and consequently connection to mobile communications terminal (MS) 101 cannot be made, data will be held in data memory 205 (ST 505), and after an interval, a second attempt at connection will be made (ST 506).

Moreover, in case connection is difficult due to a reason on the operator's part such as a large number of accesses from users, data that is subject to downloading will be held in data memory 205 (ST 505), and after an interval, a second attempt at connection will be made (ST 506).

If connection to mobile communication terminal (MS) 101 is possible, data is transferred (downloaded) from contents server 105 to mobile communication terminal (MS) 101 (ST 502).

In case connection to mobile communications terminal (MS) 101 cannot be established, a decision is made as to whether the number of tries is a given number (N times) (ST 507).

If the number of tries equals to the given number, access decision circuit 201 transmits a download failure email message to mobile communications terminal (MS) 101 (ST 508). Then, the data stored in data memory 205 will be discarded (ST 509). If the number of tries is below the given number, a second attempt at connection will be made after an interval (ST 506).

As thus described, according to the present invention, it is possible to disperse data transmission peak. Consequently, there is no need to reinforce communication infrastructures to deal with momentary traffic peak.

In addition, the operator handling information delivery does not have to forcibly deliver data at times of traffic peak. Therefore, there is no need to deny connection as such: "The line is busy. Please wait."

### (Embodiment 2)

According to the present embodiment, when a request for downloading is made from the user, an information delivery management apparatus promptly accesses the contents server to retrieve and temporarily hold the data that is needed.

Then, the volume of traffic (level of congestion) in wireless channels is monitored, and connection to the mobile communication terminal (MS) will be automatically made at a point that the volume of traffic goes below a certain level in the allowable delay time, and information will be delivered to the mobile communications terminal (MS).

That is, according to the present embodiment, traffic in wireless channels is monitored, and data obtained from the data provider based on data request from communications terminals will be temporarily stored by means of an information delivery management apparatus provided in a mobile network. Then, when traffic is light in wireless channels, access to the communication terminal will be established to transmit data to the communication terminal.

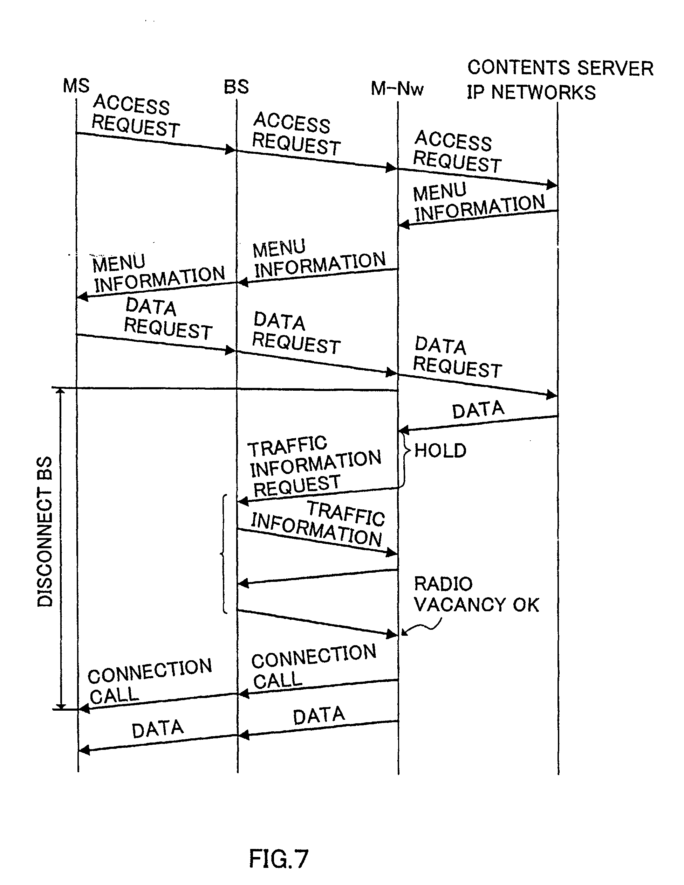

FIG. 7 shows a sequence diagram describing another example of an information delivery method.

The information delivery method according to the present embodiment will be described with reference to FIG. 1, FIG. 2, and FIG. 7.

In the following a case will be described where the level of congestion in wireless channels refers to traffic volume.

In FIG. 7, when mobile communications terminal (MS) 101 receives downloading services such as music distribution, first, mobile communications terminal (MS) 101 issues an access request (requested file name, access end, allowed delay time) to base station (BS) 102. This access request is transmitted from base station (BS) 102 to contents server 105 on an internet network (IP network) by way of information delivery management apparatus 103.

In reply to the access request, from contents server 105, menu information is transmitted from contents server 105 to information delivery management apparatus 103 and then transmitted to mobile communications terminal (MS) 101 by way of base station (BS) 102.

In case such as when the frequency of access is high, depending on needs, the menu information is held in data memory 205 of information delivery management apparatus 103.

When the user chooses data that he wants to download from the menu displayed on mobile communications terminal (MS) 101, a data request is transmitted from mobile communications terminal (MS) 101 to information delivery management apparatus 103 by way of base station (BS) 102.

Memory contents management circuit 204 of information delivery management apparatus 103 checks as to whether the information requested for downloading is the same as the information stored in data memory 205. If they are the same, no access will be made to contents server 105.

On the other hand, if the result of above checking reveals that they are not the same information, access decision circuit 201 promptly requests downloading of the information to contents server 105.

Access decision circuit 201 is informed to the effect that there has been a data request, and thereafter mobile communications terminal (MS) 101 disconnects channels with base station (BS) 102.

After receiving the data request, contents server 105 promptly transmits data to information delivery management apparatus 103. In information delivery management apparatus 103, the data from contents server 105 is stored in data memory 205.

Radio traffic monitoring circuit 206 of traffic monitoring circuit 1032 monitors traffic in wireless channels between mobile communications terminal (MS) 101 and base station (BS) 102.

To be more specific, radio traffic monitoring circuit 206 issues a traffic monitoring request to base station (BS) 102. In reply to the traffic monitoring request, base station (BS) 102 transmits traffic information to radio traffic monitoring circuit 206.

This transmission of traffic information from base station (BS) 102 may be performed on a regular basis.

As for the decision in radio traffic monitoring circuit 206, a possible arrangement is to set a threshold level of traffic, and when traffic grows above this threshold level, a decision may be made that traffic is crowded. In addition, it is possible to predict traffic in a given time period based on earlier traffic conditions ( such as shown in FIG. 9 ) and make a decision based thereon.

When radio traffic monitoring circuit 206 obtains information that wireless channels have space from base station (BS) 102, radio traffic monitor circuit 206 outputs a control signal to access decision circuit 201 to the effect that wireless channels have space.

Upon receiving this control signal, access decision circuit 201 transmits the data request stored in request memory 202 to contents server 105.

Moreover, access decision circuit 201 makes a connection call to mobile communications terminal (MS) 101 by way of base station (BS) 102.

When mobile communications terminal (MS) 101 and base station (BS) 102 are connected, the data which mobile communications terminal (MS) 101 requested will be downloaded from contents server 105 to mobile communications terminal (MS) 101 by way of information delivery management apparatus 103 and base station (BS) 102.

Similar to the case of Embodiment 1, when mobile communications terminal (MS) 101 is busy or when connection thereto cannot be established (such as when the power is turned off), the data may continue to be held.

Furthermore, if the data is a popular one frequently requested from other mobile communications terminals (MS) (contents that are frequently requested or envisaged to be frequently requested), establishing connection to the service side every time there is a request from the user results in an inefficiency on the network side and a burden on facilities.

So by holding the data in data memory 205 of information delivery management apparatus 103, other users can be accommodated, too.

Such management takes place in user access management circuit 2011 of access decision circuit 201. In addition, as with the operations from the monitoring of radio traffic through data downloading, the operations shown in FIG. 4 and FIG. 6 in respect to Embodiment 1 are applicable.

However, according to the present embodiment, the number of direct accesses to contents server 105 will decrease, from which a problem derives regarding the collection of network use fees.

However, the problem will solve if the operator side makes connection by proxy and performs the collection of use fees instead of the contents provider.

By this means, the burden on the mobile network that is connected to the internet network (M-NW) can be reduced.

As thus described, according to the present embodiment, it is possible to suppress traffic peak. This makes infrastructural reinforcements for securing system capacity that can deal with momentary peak unnecessary.

In addition, according to the present system, there is no need for the operator to deliver data at times of traffic peak or deny connection as such "Traffic jam. Please wait."

Moreover, it is possible to avoid infra investments for enhancing uneconomical system capacity to deal with momentary peak.

### (Embodiment 3)

With this embodiment, a method will be described that combines the methods of Embodiment 1 and Embodiment 2.

That is, according to the present embodiment, when there is a request for downloading from the user, an information delivery management apparatus accesses the contents server depending on the level of congestion on the network side (cable portions in a mobile network, internet network, and the data provider (contents server)) to acquire data that is needed, and after holding it temporarily, monitors the volume of traffic in wireless channels (level of congestion), and at a point the volume of traffic goes below a certain level within the allowable delay time, makes connection to the mobile communication terminal side (MS) and transmits the data to the mobile communication terminal (MS).

In the following, a case will be described where the level of congestion refers to traffic volume. That is, according to the data transmission method of the present embodiment, traffic in wireless channels and traffic on the network side are monitored, and a data request from the communications terminal is stored in an information delivery management apparatus on a mobile network.

Then, when traffic becomes light on the network side, a downloading request is transmitted to the data provider, and the data obtained from the data provider is temporarily stored in the information delivery management apparatus provided in a mobile network, and access to the mobile communications terminal will be made when traffic in wireless channels becomes light, whereupon the data will be transmitted to the mobile communications terminal.

For example, although an internet network is large-volumed and traffic congestion may have little impact thereon, if a large number of accesses concentrate upon a contents server, the problem of congestion is likely to occur.

Therefore, according to the present invention, when the level of congestion in a contents server can be monitored through an information delivery management apparatus, not only the level of congestion in the mobile network and the internet network but also the level of congestion in the contents server can be used as an index for the level of congestion on the network side.

Therefore, according to the present embodiment, the level of congestion on the network side refers to the level of congestion in the internet network seen from the mobile network (M-NW) side as well as the level of congestion in the contents server.

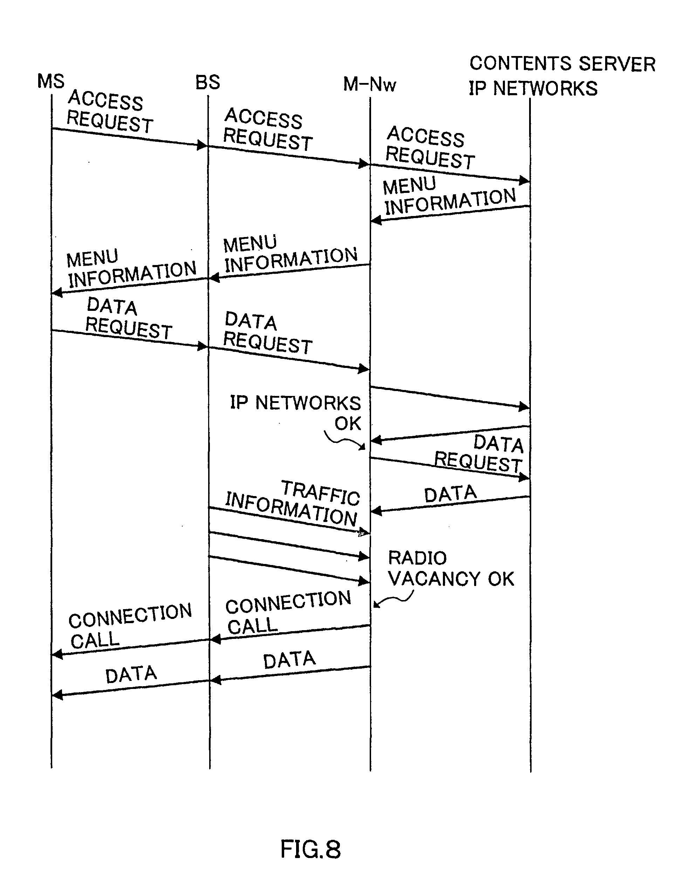

FIG. 8 shows a sequence diagram describing an example of the information delivery method of the present invention. The information delivery method according to the present embodiment will be described with reference to FIG. 1, FIG. 2 and FIG. 8.

In the information transmission method shown in FIG. 1 and FIG. 2, when mobile communications terminal (MS) 101 receives downloading services such as music distribution, first, mobile communications terminal (MS) 101 issues an access request (requested file name, access end, allowed delay time) to base station (BS) 102.

This access request is transmitted from base station (BS) 102 to contents server 105 on the internet network (IP network) by way of information delivery management apparatus 103.

In response to the access request, menu information is transmitted from contents server 105 to information delivery management apparatus 103, and then transmitted to mobile communications terminal (MS) 101 by way of base station (BS) 102.

In case such as when the frequency of access is high, depending on needs, the menu information is held in data memory 205 of information delivery management apparatus 103.

When the user chooses data that he wants to download from the menu displayed on mobile communications terminal (MS) 101, a data request is transmitted from mobile communications terminal (MS) 101 to information delivery management apparatus 103 by way of base station (BS) 102.

This data request is stored in request memory 202.

At this point, network traffic monitoring circuit 207 of traffic monitor circuit 1032 monitors the level of congestion (traffic) in the internet network and/or in the contents server.

Similar to the case of network traffic monitoring circuit 106, the decision in radio traffic monitoring circuit 207 is that a threshold level of traffic is set, and when traffic grows above this threshold level, a decision may be made that traffic is crowded. In addition, traffic in a given time period may be predicted based on earlier traffic circumstances.

When a decision is made that traffic is light on the network side, a downloading request is transmitted from access decision circuit 201 of information delivery management apparatus 103 to contents server 105.

Upon receiving the downloading request, contents server 105 promptly transmits the requested information (data) to information delivery management apparatus 103. This data is stored in data memory 205.

Next, radio traffic monitoring circuit 206 in traffic monitoring circuit 1032 monitors traffic in wireless channels between mobile communications terminal (MS) 101 and base station (BS) 102.

To be more specific, BS 102 transmits traffic information concerning wireless channels to radio traffic monitoring circuit 206.

The transmission of traffic information from base station (BS) 102 can be performed either regularly or when such request is made from radio traffic monitoring circuit 206 to base station (BS) 102.

When radio traffic monitoring circuit 206 obtains information that wireless channels have space from base station (BS) 102, radio traffic monitoring circuit 206 outputs a control signal to access decision circuit 201 to the effect that wireless channels have space.

Upon receiving this control signal, access decision circuit 201 makes a connection call to mobile communications terminal (MS) 101 by way of base station (BS) 102.

When mobile communications terminal (MS) 101 and base station (BS) 102 are connected, the data stored in data memory 205 is transmitted to mobile communications terminal (MS) 101 by way of base station (BS) 102.

Similar to the case of Embodiment 1, in case mobile communications terminal (MS) 101 is busy or connection thereto cannot be made (when the power of the terminal is turned off),the information (data) that is temporarily stored in memory may continue to be held.

In addition, as with the operations from the monitoring of radio traffic through data downloading, the operations shown in FIG. 4 and FIG. 6 in respect to Embodiment 1 are applicable.

The present invention is not limited to above Embodiments 1 through 3 and may be implemented in various other forms.

For example, when wireless channels or channels on the network side are congested, data that is subject to downloading is temporarily held in an information delivery management apparatus.

With the condition of radio traffic and network traffic monitored thus, large-volume transmission such as downloading is performed when traffic is light.

With respect to the transmission method for access requests and data requests, channel connection method, and data holding method, these are not limited to those of above Embodiments 1 to 3 and can be implemented in various ways.

As thus described above, according to the data transmission method of the present invention, at times of congestion in wireless channels and network channels, data that is subject to downloading is temporarily held while the circumstance of congestion on the wireless side and on the network side is monitored, and when congestion is light (i.e., when traffic is light), large volume data transmission such as downloading is performed, which as a whole makes it possible to avoid traffic congestion and perform efficient data transmission without infra investments into system capacity expansion to deal with momentary peak.

The present description is based on Japanese Patent Application No. 2001-66058 filed on March 9, 2001, entire content of which is expressly incorporated herein for reference.

### Industrial Applicability

The present invention suits for use in an information delivery system that delivers video data or speech data from a contents server to mobile phone terminals by way of a network.

## Claims

1. An information delivery method whereby a downloading request is sent from a mobile communications terminal to a contents server by way of a mobile network including a wireless network and a cable network, and information output from said contents server in response to the downloading request is delivered to said mobile communications terminal, comprising the steps of:
holding in said mobile network information of an allowable time for carrying out downloading;
temporarily storing in said mobile network one of said downloading request and the information that is output from said contents server and that should be delivered to said mobile communications terminal;
monitoring a level of congestion in a wireless channel in said wireless network; and
transmitting one of the downloading request stored in said mobile network and the information that is temporarily stored in said mobile network and that should be delivered to said mobile communication terminal, when within said allowable time the level of congestion in said wireless channel is at a level that does not affect said downloading.

2. The information delivery method according to claim 1, further comprising a step of checking a data volume of the information that should be delivered to said mobile communications terminal, wherein, when an assumption is made on the basis of a data volume, a level of congestion in said wireless channel, and a permissible time that the downloading of the information that should be delivered to said mobile communications terminal will be completed within the allowable time, the downloading request stored in said mobile network is transmitted to said contents server, or the information that is temporarily stored in said mobile network and that should be delivered to said mobile communications terminal is transmitted to said mobile communications terminal.

3. The information delivery method according to claim 1, wherein said allowable time is set, within a time period in which a decrease in the level of congestion in said wireless channel is predicted, based on one of information of a past history of congestion levels and information obtained in advance regarding the level of congestion in said wireless channel.

4. The information delivery method according to claim 1, further comprising a step of monitoring a level of congestion in said cable network or in said contents server, wherein when a level of congestion in said cable network or in said contents server is low, regardless of the level of congestion in said wireless channel, the downloading request is transmitted to said contents server, and the information output from said contents server in response to said downloading request is temporarily stored in said mobile network, and when the level of congestion in said wireless channel is low, the temporarily stored information is transmitted to said mobile communications terminal.

5. The information delivery method according to claim 1, wherein when connection to said mobile communications terminal cannot be made within said allowable time by means of a wireless channel, the information temporarily stored in said mobile network is discarded.

6. The information delivery method according to claim 1, wherein the information temporarily stored in said mobile network is held after a downloading to the mobile communications terminal that issued said downloading request is completed, and, in response to a downloading request from a different mobile communications terminal, the information held in said mobile network is transmitted to said different mobile communications terminal.

7. The information delivery method according to claim 1, wherein said wireless channel is disconnected after the downloading request is output from said mobile communications terminal until a transmission of data corresponding to said request.

8. The information delivery method according to claim 1, wherein after outputting a downloading request to said contents server, said mobile communications terminal is disconnected from said wireless channel until information is actually transmitted to said mobile communications terminal.

9. The information delivery method according to claim 1, wherein information is forcibly transmitted to said mobile communications terminal when said allowable time is near an expiration without a decrease in the level of congestion in said wireless channel.

10. The information delivery method according to claim 1, wherein a level of congestion is predicted based on information of one of information of a past history of congestion levels in said wireless channel or in said cable network and information obtained in advance regarding the level of congestion in said wireless channel or in said cable network, and, a start for information delivery to said mobile communications terminal is determined using a predicted level of congestion.

11. An information delivery management apparatus on a mobile network for carrying out the information delivery method of claim 1, comprising:
a storage section that temporarily stores on said mobile network one of the downloading request and the information that is output from said contents server and that should be delivered to said mobile communication terminal;
a monitoring section that monitors the level of congestion in said wireless network; and
a transmission control section that transmits one of the downloading request stored in said mobile network and the information that is temporarily stored in said mobile network and that should be delivered to said mobile communications terminal, when within said allowable time the level of congestion in said wireless channel is at a level that does not affect said downloading.

12. The information delivery management apparatus according to claim 11, further comprising a data volume check section that checks a volume of the information that should be delivered to said mobile communications terminal before said information is output from said contents server.

13. The information delivery management apparatus according to claim 11, further comprising a network monitoring section that monitors a level of congestion in one of said cable network and said contents server.

14. The information delivery management apparatus according to claim 11, wherein said transmission control section controls a timing to access said contents server or said mobile communications terminal based on one of information of a past history of congestion levels in said wireless channel or in said cable network and information obtained in advance regarding the level of congestion in said wireless channel or in said cable network.
